(19) Europäisches Patentamt / European Patent Office / Office européen des brevets

(11) **EP 3 001 742 B1**

(12) **EUROPEAN PATENT SPECIFICATION**

(45) Date of publication and mention
of the grant of the patent:
**11.11.2020 Bulletin 2020/46**

(51) Int Cl.:
*H04W 56/00* *(2009.01)*    *H04W 84/18* *(2009.01)*

(21) Application number: **13893717.2**

(22) Date of filing: **18.09.2013**

(86) International application number:
**PCT/CN2013/083788**

(87) International publication number:
**WO 2015/039308 (26.03.2015 Gazette 2015/12)**

(54) **METHOD AND APPARATUS FOR DEVICE-TO-DEVICE COMMUNICATION**

VERFAHREN UND VORRICHTUNG ZUR VORRICHTUNG-ZU-VORRICHTUNG-KOMMUNIKATION

PROCÉDÉ ET APPAREIL DE COMMUNICATION DE DISPOSITIF À DISPOSITIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.03.2016 Bulletin 2016/13**

(73) Proprietor: **Huawei Device Co., Ltd.
Dongguan, Guangdong 523808 (CN)**

(72) Inventor: **WANG, Jian
Shenzhen
Guangdong 518129 (CN)**

(74) Representative: **Körber, Martin Hans
Mitscherlich PartmbB
Patent- und Rechtsanwälte
Sonnenstrasse 33
80331 München (DE)**

(56) References cited:
**WO-A1-2011/161560      WO-A1-2012/118451
WO-A1-2013/125925      CN-A- 103 069 899
CN-A- 103 108 389      US-A1- 2013 159 554**

Description

## TECHNICAL FIELD

Embodiments of the present invention relate to the field of communications technologies, and in particular, to a method and apparatus for D2D (Device to Device, device-to-device) communication.

## BACKGROUND

Because of a transmission delay between a base station and user equipment, there is a lag between time when the base station sends downlink information and time when the UE (full name in English: User Equipment, full name in Chinese: user equipment) receives the downlink information sent by the base station, and there is also a lag between time when the UE sends uplink information and time when the base station receives the uplink information sent by the UE. Therefore, to avoid causing interference among symbols, in design of a physical layer, timing of a data frame (that is, timing for the UE to receive or send the data frame), a data frame configuration, and the like need to be designed accurately.

For example, in an LTE TDD (full name in English: Time Division Duplex, full name in Chinese: Time Division Duplex) system, a data frame includes a special subframe, the special subframe includes a GP (full name in English: Guard Period, full name in Chinese: guard period), and the guard period is set between a downlink data frame and an uplink data frame. The UE sends, according to a TA (full name in English: Timing Advance, full name in Chinese: timing advance) sent by the base station, uplink information in advance, which is implemented by using the GP set in the data frame. In this way, time when the uplink information of the UE arrives at the base station can be aligned, and a guard period used for switching of uplink and downlink data exists between the base station and the user equipment.

However, a design solution in the prior art cannot be directly applied to D2D (full name in English: Device to Device, full name in Chinese: device to device) communication. D2D communication is a technology that allows direct communication between UEs under the control of a system. In such a communication scenario, not only does a timing offset exist between a base station and UE, but a timing offset also exists between UEs. In a D2D communication service, for example, a proximity service (full name in English: Device to Device Proximity Service, short name in English: D2D ProSe) service between UEs in an LTE system, an offset exists between a timing offset and timing of a data frame, thereby causing interference among symbols.

WO 2013/125925 A1 discloses a method and device for tracking synchronisation between apparatuses in a wireless communication system.

WO 2012/118451 A1 discloses a communication terminal and method for performing communication.

## SUMMARY

Embodiments of the present invention provide a method and apparatus for device-to-device communication, which can avoid interference among symbols.

According to a first aspect, a method for device-to-device communication is provided according to claim 1.

According to a second aspect, a user equipment is provided according to claim 3.

The method and device provided in the embodiments of the present invention can avoid interference among symbols.

## BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.

FIG. 1 is a schematic diagram of a scenario of a D2D communication network applicable to an embodiment of the present invention;

FIG. 2 is a schematic diagram of another scenario of a D2D communication network applicable to an embodiment of the present invention;

FIG. 3 is a flowchart of a method for device-to-device communication according to an embodiment of the present invention;

FIG. 4 is a schematic diagram of a data frame configuration according to an embodiment of the present invention;

FIG. 5 is a schematic diagram of a data frame configuration according to another embodiment of the present invention;

FIG. 6 is a schematic diagram of a data frame configuration according to still another embodiment of the present invention;

FIG. 7 is a schematic diagram of a data frame configuration according to yet another embodiment of the present invention;

FIG. 8 is a flowchart of a method for device-to-device communication according to an embodiment of the present invention;

FIG. 9 is a schematic diagram of a data frame configuration according to an embodiment of the present invention;

FIG. 10 is a structural block diagram of first user equipment according to an embodiment of the present invention;

FIG. 11 is a structural block diagram of a device according to an embodiment of the present invention;

FIG. 12 is a structural block diagram of first user equipment according to another embodiment of the present invention; and

FIG. 13 is a structural block diagram of a device according to another embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

It should be understood that the technical solutions in the embodiments of the present invention are applicable to various communications systems, for example: a GSM (full name in English: Global System for Mobile Communications, full name in Chinese: Global System for Mobile communications) system, a CDMA (full name in English: Code Division Multiple Access, full name in Chinese: Code Division Multiple Access) system, a WCDMA (full name in English: Wideband Code Division Multiple Access, full name in Chinese: Wideband Code Division Multiple Access) system, a GPRS (full name in English: General Packet Radio Service, full name in Chinese: General Packet Radio Service), an LTE (full name in English: Long Term Evolution, full name in Chinese: Long Term Evolution) system, an LTE FDD (full name in English: Frequency Division Duplex, full name in Chinese: Frequency Division Duplex) system, an LTE TDD (full name in English: Time Division Duplex, full name in Chinese: Time Division Duplex), and a UMTS (full name in English: Universal Mobile Telecommunications System, full name in Chinese: Universal Mobile Telecommunications System).

In the embodiments of the present invention, user equipment (UE) may be referred to as a terminal (Terminal), an MS (full name in English: Mobile Station, full name in Chinese: mobile station), a mobile terminal (Mobile Terminal), or the like. The user equipment may communicate with one or more core networks through an RAN (full name in English: Radio Access Network, full name in Chinese: radio access network). For example, the user equipment may be a mobile phone (or referred to as a "cellular" phone), a computer having a mobile terminal, or an MTC (full name in English: Machine Type Communication, full name in Chinese: machine type communication) terminal. For example, the user equipment may also be a portable, pocket-sized, handheld, computer built-in, or vehicle-mounted mobile apparatus, which exchanges audio and/or data with the radio access network.

In the embodiments of the present invention, a base station may be a BTS (full name in English: Base Transceiver Station, full name in Chinese: base station) in GSM or CDMA, or may also be an NB (full name in English: NodeB, full name in Chinese: base station) in WCDMA, or may further be an eNodeB (full name in English: Evolved NodeB, full name in Chinese: evolved NodeB) in LTE, which is not limited in the present invention.

A base station controller may be a BSC in GSM or CDMA, or may also be an RNC in WCDMA, or may further be combined in an eNodeB in LTE.

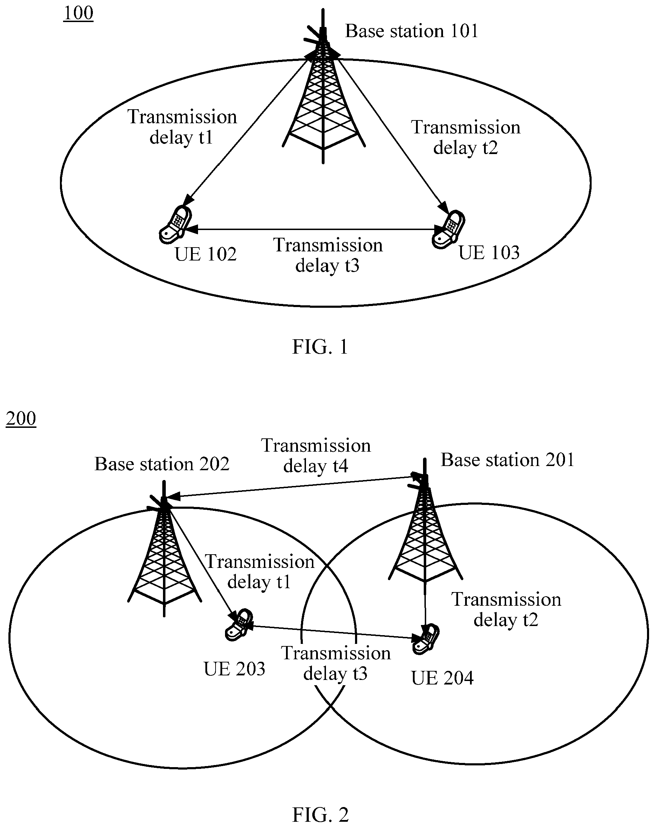

FIG. 1 and FIG. 2 are schematic diagrams of scenarios of D2D communication networks applicable to embodiments of the present invention. One base station and two UEs, that is, UE 102 and UE 103, are described in FIG. 1. A base station 101 is a serving base station of the UE 102 and the UE 103. The UE 102 and the UE 103 may perform D2D communication, which is merely for convenience of description. It should be noted that a network system in FIG. 1 is a scenario that may implement the present invention and is merely given to describe the embodiments of the present invention more clearly, but not to limit the application scope of the embodiments of the present invention. For example, the embodiments of the present invention may also be applied to another scenario, exemplarily, as shown in FIG. 2. In FIG. 2, a serving base station of UE 203 is a base station 202, a serving base station of UE 204 is a base station 201, and the UE 203 and the UE 204 may perform D2D communication.

It should be understood that quantities of devices in FIG. 1 or FIG. 2 are not limited in the embodiments of the present invention. For example, a larger quantity of UEs may be included. It should be further understood that a type of a base station is not limited in the embodiments of the present invention, and a base station may be a macro base station, or may also be a micro base station, or may further be a picocell base station, a femto base station, a repeater station, or the like.

Because of a transmission delay between a base station and UE, as shown in FIG. 1, there is a lag t between time when the UE 102 sends uplink information and time when the base station 101 receives the uplink information sent by the UE 102. However, in D2D communication, a transmission delay not only exists between a base station and UE, but a transmission delay also exists between UEs. When two UEs that perform D2D communication belong to different serving cells, a timing offset also exists between base stations. As shown in FIG. 2, a timing offset t4 exists between the base station 201 and the base station 202.

The embodiments of the present invention provide a method and apparatus for D2D communication, so that interference among symbols can be avoided.

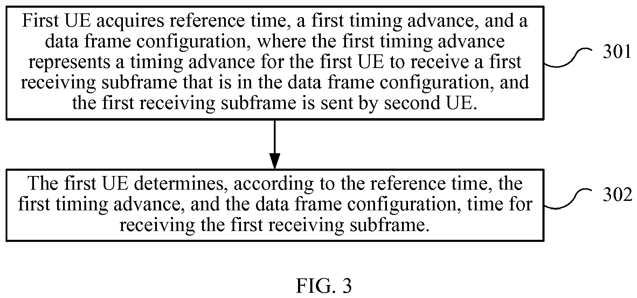

FIG. 3 is a flowchart of a method for device-to-device communication according to an embodiment of the present invention. The method in FIG. 3 is executed by UE.

301: First UE acquires reference time, a first timing advance, and a data frame configuration, where the first timing advance represents a timing advance for the first UE to receive a first receiving subframe that is in the data frame configuration, and the first receiving subframe is sent by second UE.

302: The first UE determines, according to the reference time, the first timing advance, and the data frame configuration, time for receiving the first receiving subframe.

In this embodiment of the present invention, first UE determines, according to reference time, a first timing advance, and a data frame configuration, time for receiving a first receiving subframe that is in the data frame configuration, where the first receiving subframe is sent by second UE, and the first timing advance represents a timing advance for the first UE to receive the first receiving subframe that is in the data frame configuration. Therefore, time when the first UE receives the first receiving subframe sent by the second UE is adjusted by using the first timing advance, so that the first UE has more accurate timing of a data frame, and interference among symbols can be avoided.

Optionally, as an embodiment, when a first serving base station of the first UE is the same as a second serving base station of the second UE, as shown in the scenario in FIG. 1, the first timing advance may be determined according to at least one of the following timing offsets: a first timing offset between the first UE and the first serving base station, a second timing offset between the second UE and the second serving base station, and a third timing offset between the first UE and the second UE. For example, the first timing advance may be the first timing offset, or may be a combination of multiple timing offsets.

Optionally, the reference time may be determined according to at least one of the following kinds of time: time when the first serving base station sends a data frame, time when the first UE receives a data frame sent by the first serving base station, and time when the second UE receives a data frame sent by the first serving base station.

Alternatively, when a first serving base station is different from a second serving base station, as shown in the scenario in FIG. 2, the first timing advance may be determined according to at least one of the following timing offsets: a first timing offset between the first UE and the first serving base station, a second timing offset between the second UE and the second serving base station, a third timing offset between the first UE and the second UE, and a fourth timing offset between the first serving base station and the second serving base station.

Optionally, the reference time may be determined according to at least one of the following kinds of time: time when the first serving base station sends a data frame, time when the second serving base station sends a data frame, time when the first UE receives a data frame sent by the first serving base station, time when the first UE receives a data frame sent by the second serving base station, time when the second UE receives a data frame sent by the first serving base station, and time when the second UE receives a data frame sent by the second serving base station.

Specifically, in step 302, the time t for receiving the first receiving subframe may be determined as:

$$t = t_0 - t_1 + t_{subframe} \qquad (1)$$

where, $t_0$ is the reference time and is time when the first serving base station sends a downlink data frame to the first UE, $t_1$ is the first timing advance and is one of the first timing offset, the second timing offset, or the third timing offset, and $t_{subframe}$ represents a delay between the first receiving subframe and the first subframe that is in the data frame configuration.

Alternatively, in step 302, the time t for receiving the first receiving subframe may be determined as:

$$t = t_0 - t_1 / 2 + t_{subframe} \qquad (2)$$

where, $t_0$ is the reference time and is time when the first serving base station sends a downlink data frame to the first UE, $t_1$ is one of the first timing offset, the second timing offset, or the third timing offset, $t_1/2$ is the first timing advance, and $t_{subframe}$ represents a delay between the first receiving subframe and the first subframe that is in the data frame configuration.

Alternatively, in step 302, the time t for receiving the first receiving subframe may be determined as:

$$t = t_0 - (t_1 - t_2 - t_3) + t_{subframe} \qquad (3)$$

where, $t_0$ is the reference time and is time when the first serving base station sends a downlink data frame to the first UE, $(t_1 - t_2 - t_3)$ is the first timing advance, $t_1$ is the first timing offset, $t_2$ is the second timing offset, $t_3$ is the third timing offset, and $t_{subframe}$ represents a delay between the first receiving subframe and the first subframe that is in the data frame configuration.

As shown in the scenario in FIG. 2, in step 302, the time t for receiving the first receiving subframe may also be determined as:

$$t = t_0 - (t_1 + t_4) + t_{subframe} \qquad (4)$$

where, $t_0$ is the reference time and is time when the first serving base station sends a downlink data frame to the first UE, $(t_1 + t_4)$ is the first timing advance, $t_1$ is one of the first timing offset, the second timing offset, or the third timing offset, $t_4$ is the fourth timing offset, and $t_{subframe}$ represents a delay between the first receiving subframe and the first subframe that is in the data frame configuration.

Alternatively, the time t for receiving the first receiving subframe may also be determined as:

$$t = t_0 - (t_1/2 + t_4) + t_{subframe} \qquad (5)$$

where, $t_0$ is the reference time and is time when the first serving base station sends a downlink data frame to the first UE, $(t_1/2 + t_4)$ is the first timing advance, $t_1$ is one of the first timing offset, the second timing offset, or the third timing offset, $t_4$ is the fourth timing offset, and $t_{subframe}$ represents a delay between the first receiving subframe and the first subframe that is in the data frame configuration.

It should be understood that in the foregoing formulas (1) to (5) by using which the first UE determines the time t for receiving the first receiving subframe, selection of the reference time and examples of the first timing advance are merely exemplary, but are not intended to limit the scope of the present invention.

It should be noted that being determined by using a timing offset does not mean being totally equal to the timing offset here. For example, the first timing advance is determined by using the first timing offset, and it is assumed that the first timing offset is TA1; then the first timing advance may be TA1, or TA1/2, or the like. For another example, the first timing advance is determined by using a combination of the first timing offset and the second timing offset, and it is assumed that the first timing offset is TA1, and the second timing offset is TA2; then the first timing advance may be (TA1+TA2)/2, or the like. In an actual network, a timing offset is related to a transmission delay. In a normal case, it may be considered that the timing offset is twice as long as the transmission delay. For example, a timing offset between UE and a base station may be twice as long as a transmission delay between the UE and the base station.

By using the foregoing solutions, the first timing advance is determined by using the timing offset, and the time when the first UE receives the first receiving subframe sent by the second UE is adjusted, so that the first UE has more accurate timing of a data frame, and interference among symbols can be avoided.

Optionally, determining of the first timing advance may be performed by a serving base station of the first UE, that is, in step 301, the first UE may acquire the first timing advance from the serving base station of the first UE. Certainly, the first UE may receive, from the serving base station of the first UE, at least one timing offset used for determining the first timing advance, and the first UE determines the first timing advance according to the at least one timing offset. It should be understood that this is not limited in this embodiment of the present invention.

Optionally, as another embodiment, the first UE determines, according to the reference time, a second timing advance, and the data frame configuration, time when the first UE sends a first sending subframe that is in the data frame configuration, where the second timing advance represents a timing advance for the first UE to send the first sending subframe. Optionally, a value of the second timing advance may be the first timing offset between the first UE and a serving base station of the first UE.

Optionally, as another embodiment, in step 301, the first UE may acquire the data frame configuration from a network side device (for example, the first serving base station), that is, the data frame configuration is delivered to the first UE by the network side device. Alternatively, the first UE may pre-negotiate with the second UE on the data frame configuration to be used. For example, one UE of the first UE and the second UE determines the data frame configuration, and sends the data frame configuration to the other UE.

Optionally, as another embodiment, the data frame configuration may include at least one GP from sending to receiving and at least one GP from receiving to sending; or the data frame configuration may include only one GP from sending to receiving, the data frame configuration may also include no GP, or the like. It should be understood that a form of the data frame configuration used in this embodiment of the present invention is not limited.

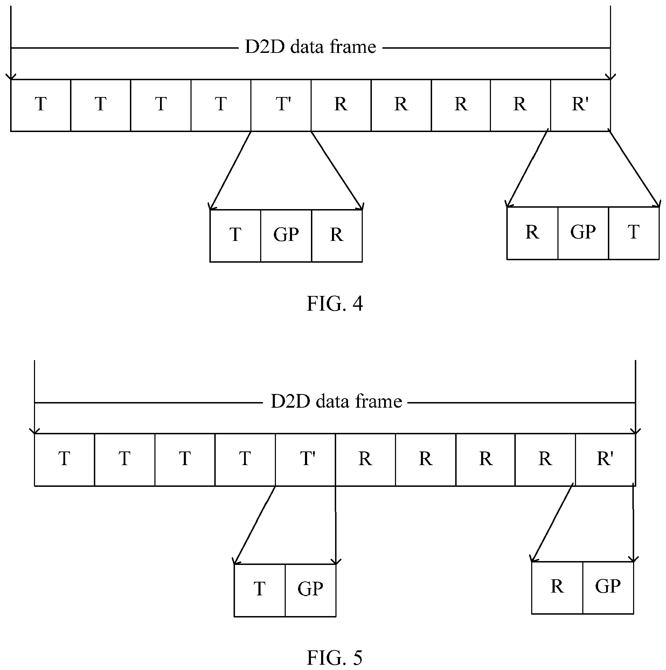

Specifically, as shown in FIG. 4, the data frame configuration of the first UE in D2D communication includes 10 transmission subframes. The 10 transmission subframes include in sequence include in sequence 4 sending subframes T, 1 sending-to-receiving transformation subframe T', 4 receiving subframes R, and 1 receiving-to-sending transformation subframe R'. The sending-to-receiving transformation subframe T' includes in sequence a sending part, a GP (which is also referred to as a GP from sending to receiving), and a receiving part. The receiving-to-sending transformation subframe R' includes in sequence a receiving part, a GP (which is also referred to as a GP from receiving to sending), and a sending part. The transformation subframes may also be in another form. As shown in FIG. 5, the transformation subframe T' includes in sequence a sending part and a GP (which is also referred to as a GP from sending to receiving), and the transformation subframe R' includes in sequence a receiving part and a GP (which is also referred to as a GP from receiving to sending). Correspondingly, for the second UE, the data frame configuration of the second UE includes in sequence 4 receiving subframes R, 1 receiving-to-sending transformation subframe R', 4 sending subframes T, and 1 sending-to-receiving transformation subframe T'.

Certainly, the data frame configuration of the first UE may include in sequence 4 receiving subframes R, 1 receiving-to-sending transformation subframe R', 4 sending subframes T, and 1 sending-to-receiving transformation subframe T', and the data frame configuration of the second UE may include in sequence 4 sending subframes T, 1 sending-to-receiving transformation subframe T', 4 receiving subframes R, and 1 receiving-to-sending transformation subframe R'.

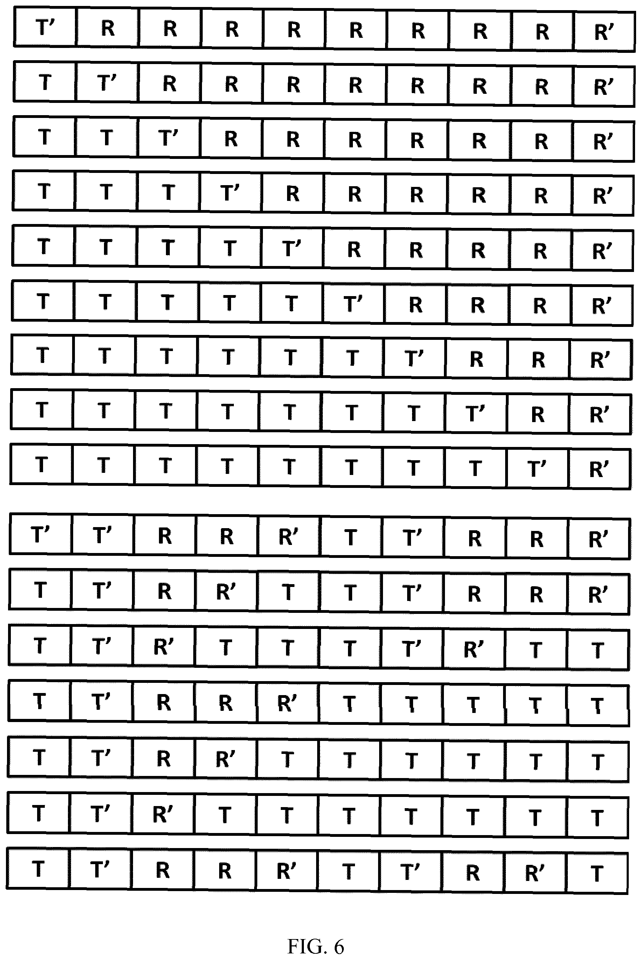

It should be understood that this is not limited in this embodiment of the present invention. It should be further noted that quantities and locations (sequence) of sending subframes, receiving subframes, and transformation subframes (that is, GP) that are in the data frame configuration are not limited in this embodiment of the present invention. For example, the data frame configuration may be exemplarily shown in FIG. 6.

Optionally, first time and second time may be determined according to time when UE performing device-to-device D2D communication receives a first receiving subframe that is in a data frame configuration, time when the UE sends a first sending subframe that is in the data frame configuration, and the data frame configuration; and a guard period is set between the first subframe and a second subframe according to the first time and the second time. The first subframe and the second subframe are sequentially adjacent in the data frame configuration; when the first subframe is a receiving subframe and the second subframe is a sending subframe, the first time represents end time (which is also referred to as "stop time") when the UE receives the first subframe, and the second time represents start time when the UE sends the second subframe; or, when the first subframe is a sending subframe and the second subframe is a receiving subframe, the first time represents end time when the UE sends the first subframe, and the second time represents start time when the UE receives the second subframe.

In other words, a GP may also be set according to a timing advance of receiving, a timing advance of sending, and a data frame configuration. For example, the GP is set according to the first timing advance, the second timing advance, and the data frame configuration.

Specifically, when a difference between the first time and the second time is greater than a first threshold, it is set, in the data configuration, that no guard period is included between the first subframe and the second subframe; or when a difference between the first time and the second time is less than or equal to a first threshold, it is set, in the data configuration, that at least one guard period is included between the first subframe and the second subframe.

Optionally, the GP in the data frame configuration may be set by a network side device (for example, the first serving base station). Certainly, the GP in the data frame configuration may also be set through pre-negotiation by the first UE and the second UE. It should be understood that this is not limited in this embodiment of the present invention. Similarly, selection of the reference time may be delivered by a network side device to the first UE, or may also be determined through pre-negotiation by the first UE and the second UE.

Therefore, whether to set a GP in a data frame configuration is determined according to two sequentially adjacent subframes in the data frame configuration, that is, according to receiving end time of a receiving subframe and sending start time of a sending subframe, or sending end time of a sending subframe and receiving start time of a receiving subframe. In this way, interference among symbols is avoided, and resources can be effectively utilized.

This embodiment of the present invention is described in detail below with reference to a specific example.

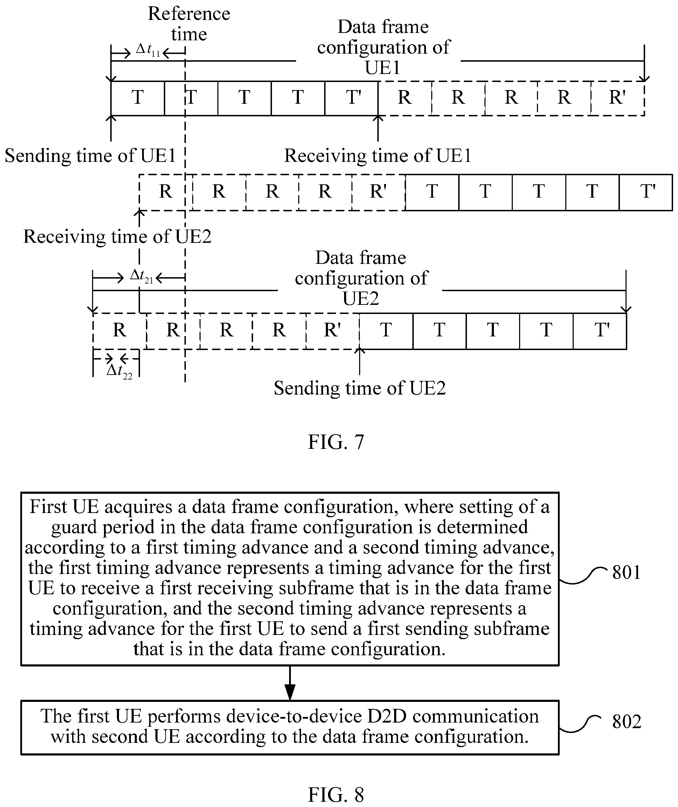

Two UEs that perform D2D communication are UE1 and UE2. UE1 and UE2 both acquire reference time, a data frame configuration, and a first timing advance (a timing advance of receiving), and optionally, further acquire a second timing advance (a timing advance of sending). For a manner of acquiring the information used for determining timing of a data frame, reference may be made to the foregoing descriptions, and no further details are provided herein again. For the data frame configuration of D2D communication, by using FIG. 7 as an example, the data frame configuration of UE1 includes 10 transmission subframes, and the 10 transmission subframes include in sequence 4 sending subframes T, 1 sending-to-receiving transformation subframe T', 4 receiving subframes R, and 1 receiving-to-sending transformation subframe R'; correspondingly, the data frame configuration of UE2 includes in sequence 4 receiving subframes R, 1 receiving-to-sending transformation subframe R', 4 sending subframes T, and 1 sending-to-receiving transformation subframe T'.

It is assumed that the reference time is T0, a timing advance of receiving and a timing advance of sending of UE1 are both $\Delta t_{11}$, and optionally, $\Delta t_{11}$ may be determined by using a timing offset. For example, $\Delta t_{11}$ may be a timing offset between UE1 and a serving base station of UE1. A timing advance of sending of UE2 is $\Delta t_{21}$, and a timing advance of receiving of UE2 is $(\Delta t_{21}-\Delta t_{22})$. Optionally, a serving base station of UE2 may send $\Delta t_{21}$ and $\Delta t_{22}$ to UE2, and then UE2 determines the timing advance of receiving; and certainly, $\Delta t_{21}$ and $(\Delta t_{21}-\Delta t_{22})$ may also be sent directly to UE2. Optionally, $\Delta t_{21}$ and $\Delta t_{22\,2}$ may also be determined according to a timing offset. Specifically, for a manner of determining a timing advance according to a timing offset, reference may be made to the foregoing descriptions, and no further details are provided herein again.

For UE1, time when UE1 sends a first sending subframe that is in the data frame configuration to UE2 is: ts1=T0-$\Delta t_{11}$. A delay between a first receiving subframe in the data frame configuration and the first subframe in the data frame configuration is $\Delta t'$, and $\Delta t'$ is a delay of 5 subframes. Time when UE1 receives the first receiving subframe sent by UE2 is: tr1=T0-$\Delta t_{11}$+$\Delta t'$. For UE2, time when UE2 receives the first sending subframe that is sent by UE1 and is in the data frame configuration is: tr2=T0-($\Delta t_{21}-\Delta t_{22}$). Time when UE2 sends the first receiving subframe that is in the data frame configuration to UE1 is: ts2= T0-$\Delta t_{21}$+$\Delta t'$. Therefore, timing of a data frame is adjusted according to a timing advance, so that UE can receive and send a subframe accurately when performing D2D communication, and interference among symbols can be avoided.

It should be noted that the foregoing examples are merely to help a person skilled in the art to understand the embodiments of the present invention better, but not to limit the scope of the present invention. A value of a timing advance may be positive or negative, and is not limited in the embodiments of the present invention.

FIG. 8 is a flowchart of a method for device-to-device communication according to an embodiment of the present invention.

801: Determine first time and second time according to time when UE performing device-to-device D2D communication receives a first receiving subframe that is in a data frame configuration, time when the UE sends a first sending subframe that is in the data frame configuration, and the data frame configuration.

802: Set a guard period between the first subframe and a second subframe according to the first time and the second time. The first subframe and the second subframe are sequentially adjacent in the data frame configuration; when the first subframe is a receiving subframe and the second subframe is a sending subframe, the first time represents end time (which is also referred to as "stop time") that the UE receives the first subframe, and the second time represents start time when the UE sends the second subframe; or, when the first subframe is a sending subframe and the second subframe is a receiving subframe, the first time represents end time when the UE sends the first subframe, and the second time represents start time when the UE receives the second subframe.

In this embodiment of the present invention, whether to set a GP in a data frame configuration is determined according to two sequentially adjacent sub frames in the data frame configuration, that is, according to receiving end time of a receiving subframe and sending start time of a sending subframe, or sending end time of a sending subframe and receiving start time of a receiving subframe. In this way, interference among symbols is avoided, and resources can be effectively utilized.

It should be noted that, in step 801, in a case in which the first subframe is a receiving subframe and the second subframe is a sending subframe, the first receiving subframe may be the same as or different from the first subframe, and in the data frame configuration, there is a particular subframe delay between the first receiving subframe and the first subframe; therefore, the end time for receiving the first subframe may be determined according to receiving time of the first receiving subframe and the subframe delay. Similarly, the start time for sending the second subframe may also be determined according to sending time of the first sending subframe and the subframe delay.

Correspondingly, in a case in which the second subframe is a receiving subframe and the first subframe is a sending subframe, the first receiving subframe may be the same as or different from the second subframe, and in the data frame configuration, there is a particular subframe delay between the first receiving subframe and the second subframe; therefore, the start time for receiving the second subframe may be determined according to receiving time of the first receiving subframe and the subframe delay. Similarly, the end time for sending the first subframe may also be determined according to sending time of the first sending subframe and the subframe delay.

Optionally, as an embodiment, in step 802, when a difference between the first time and the second time is greater than a first threshold, it is set, in the data configuration, that no guard period is included between the first subframe and the second subframe; or when a difference between the first time and the second time is less than or equal to a first threshold, it is set, in the data configuration, that at least one guard period is included between the first subframe and the second subframe.

Optionally, as another embodiment, the method in FIG. 8 may be executed by a network side device or user equipment. The GP in the data frame configuration may be set by the network side device (for example, a serving base station of the first UE). Certainly, the GP in the data frame configuration may also be set through pre-negotiation by the first UE and the second UE. It should be understood that this is not limited in this embodiment of the present invention.

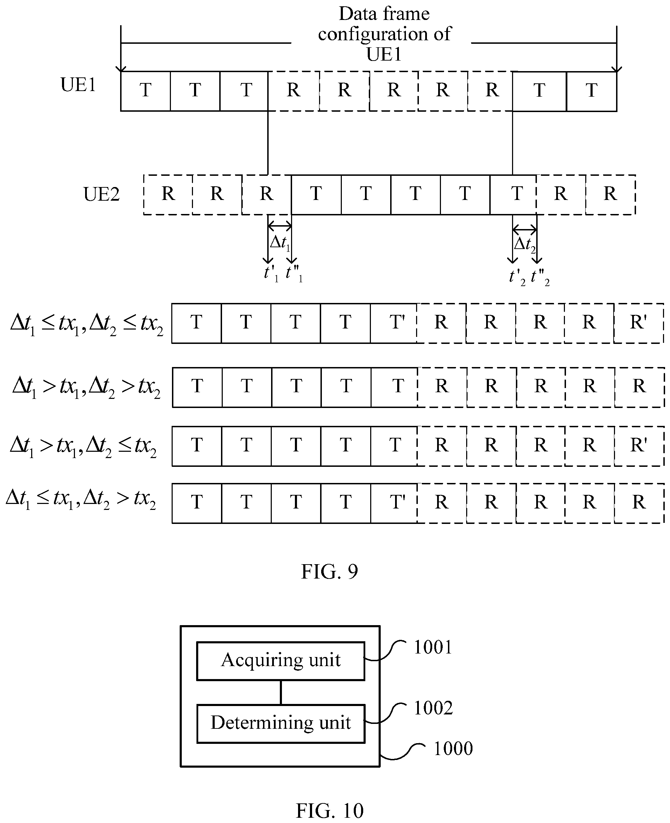

This embodiment of the present invention is described in detail below with reference to an example in FIG. 9.

It is assumed that a data frame configuration of D2D communication includes in sequence 5 sending subframes and 5 receiving subframes.

For UE1, a data frame configuration shown in FIG. 9 includes in sequence TTTRRRRRTT. Correspondingly, for UE2, a data frame configuration shown in FIG. 9 includes in sequence RRRTTTTTRR. From the perspective of UE2, for transformation from receiving to sending (that is, the first subframe is a receiving subframe and a second subframe is a sending subframe), in FIG. 9, $t'_1$ is end time of receiving of UE2, $t''_1$ is start time of sending of UE2, and $\Delta t_1$ is a difference between $t'_1$ and $t''_1$. For transformation from sending to receiving (that is, a second subframe is a receiving subframe and the first subframe is a sending subframe), in FIG. 9, $t'_2$ is start time of receiving of UE2, $t''_2$ is end time of sending of UE2, and $\Delta t_2$ is a difference between $t''_2$ and $t'_2$. Assuming that receiving-to-sending transformation time and sending-to-receiving transformation time are both $20\mu s$, it may be set that: $tx_1=20\mu s$ and $tx_2=20\mu s$. If obtained $\Delta t_1$ is 0.5ms, that is, a difference $\Delta t_1$ from receiving to sending is far greater than the receiving-to-sending transformation time $tx_1$, the receiving-to-sending transformation time does not need to be set. For a process of transformation from sending to receiving, start time $t'_2$ of receiving of UE2 is even earlier than end time $t''_2$ of sending of UE2, that is, $\Delta t_2 \leq tx_2$, and $\Delta t_2$ is a negative value. In this case, a guard period of at least 0.5ms plus $20\mu s$ is needed, that is, 8 OFDM (Orthogonal Frequency Division Multiplexing, orthogonal frequency division multiplexing) symbols are needed to provide a protection interval, so that the end time $t''_2$ of sending is earlier than the start time $t'_2$ of receiving and an interval between the end time $t''_2$ and the start time $t'_2$ is greater than a transformation time.

Exemplarily, when $\Delta t_1 > tx_1$ and $\Delta t_2 \leq tx_2$, in D2D communication, a form of a data frame configuration of UE1 may be TTTTTRRRRR', and when $\Delta t_1 > tx_1$ and $\Delta t_2 \leq tx_2$, a form of a data frame configuration of UE1 may be TTTT-TRRRRR'. When $\Delta t_1 \leq tx_1$ and $\Delta t_2 \leq tx_2$, that is, the data frame configuration needs to provide a guard period from sending to receiving and a guard period from receiving to sending, a form of the data frame configuration of UE1 may be TTTTT'RRRRR'. When $\Delta t_1 > tx_1$ and $\Delta t_2 > tx_2$, a form of the data frame configuration of UE1 may be TTTTTRRRRR, that is, no guard period needs to be set in the data frame configuration. In this way, waste of resources can be reduced.

It should be understood that $tx_1$ may be the same as or different from $tx_2$, and values of $\Delta t_1$ and $\Delta t_2$ may be positive or negative, which are not limited in this embodiment of the present invention. It should be further noted that the foregoing examples are merely exemplary, but are not intended to limit the scope of the present invention.

By using the foregoing solutions, a guard period is properly set in a data frame configuration, thereby effectively improving resource utilization.

FIG. 10 is a structural block diagram of first UE according to an embodiment of the present invention. The first UE 1000 includes an acquiring unit 1001 and a determining unit 1002.

The acquiring unit 1001 is configured to acquire reference time, a first timing advance, and a data frame configuration, where the first timing advance represents a timing advance for the first UE to receive a first receiving subframe that is in the data frame configuration, and the first receiving subframe is sent by second UE.

The determining unit 1002 is configured to determine, according to the reference time, the first timing advance, and the data frame configuration that are acquired by the acquiring unit 1001, time for receiving the first receiving subframe.

In this embodiment of the present invention, first UE determines, according to reference time, a first timing advance, and a data frame configuration, time for receiving a first receiving subframe that is in the data frame configuration, where the first receiving subframe is sent by second UE, and the first timing advance represents a timing advance for the first UE to receive the first receiving subframe that is in the data frame configuration. Therefore, the time when the first UE receives the first receiving subframe sent by the second UE is adjusted by using the first timing advance, so that the first UE has more accurate timing of a data frame, and interference among symbols can be avoided.

The first UE 1000 can implement steps, which involve the first UE, of the methods in FIG. 1 to FIG. 7, and to avoid repetition, no further details are provided again.

Optionally, as an embodiment, when a first serving base station of the first UE is the same as a second serving base station of the second UE, as shown in the scenario in FIG. 1, the first timing advance acquired by the acquiring unit 1001 may be determined according to at least one of the following timing offsets: a first timing offset between the first UE and the first serving base station, a second timing offset between the second UE and the second serving base station, and a third timing offset between the first UE and the second UE. For example, the first timing advance acquired by the acquiring unit 1001 may be the first timing offset, or may be a combination of multiple timing offsets.

Optionally, the reference time acquired by the acquiring unit 1001 may be determined according to at least one of the following kinds of time: time when the first serving base station sends a data frame, time when the first UE receives a data frame sent by the first serving base station, and time when the second UE receives a data frame sent by the first serving base station.

Alternatively, when a first serving base station of the first UE is different from a second serving base station of the second UE, as shown in the scenario in FIG. 2, the first timing advance acquired by the acquiring unit 1001 may be determined according to at least one of the following timing offsets: a first timing offset between the first UE and the first serving base station, a second timing offset between the second UE and the second serving base station, a third timing offset between the first UE and the second UE, and a fourth timing offset between the first serving base station and the second serving base station.

Optionally, the reference time acquired by the acquiring unit 1001 may be determined according to at least one of the following kinds of time: time when the first serving base station sends a data frame, time when the second serving base station sends a data frame, time when the first UE receives a data frame sent by the first serving base station, time when the first UE receives a data frame sent by the second serving base station, time when the second UE receives a data frame sent by the first serving base station, and time when the second UE receives a data frame sent by the second serving base station.

Specifically, the determining unit 1002 may be specifically configured to: determine time t for receiving the first receiving sub frame as: $t = t_0 - t_1 + t_{subframe}$, where t0 is the reference time and is time when the first serving base station sends a downlink data frame to the first UE, t1 is the first timing advance and is one of the first timing offset, the second timing offset, or the third timing offset, and tsubframe represents a delay between the first receiving subframe and the first subframe that is in the data frame configuration.

Alternatively, the determining unit 1002 may be specifically configured to: determine time t for receiving the first receiving subframe as: $t = t_0 - t_1 / 2 + t_{subframe}$, where t0 is the reference time and is time when the first serving base station sends a downlink data frame to the first UE, t1 is one of the first timing offset, the second timing offset, or the third timing offset, t1/2 is the first timing advance, and tsubframe represents a delay between the first receiving subframe and the first subframe that is in the data frame configuration.

Alternatively, the determining unit 1002 may be specifically configured to: determine time t for receiving the first receiving sub frame as: $t = t_0 - (t_1 - t_2 - t_3) + t_{subframe}$, where t0 is the reference time and is time when the first serving base station sends a downlink data frame to the first UE, (t1-t2-t3) is the first timing advance, t1 is the first timing offset, t2 is the second timing offset, t3 is the third timing offset, and tsubframe represents a delay between the first receiving subframe and the first subframe that is in the data frame configuration.

In the scenario shown in FIG. 2, the determining unit 1002 may be specifically configured to: determine time t for receiving the first receiving subframe as: $t = t_0 - (t_1+t_4) + t_{subframe}$, where t0 is the reference time and is time when the first serving base station sends a downlink data frame to the first UE, (t1+t4) is the first timing advance, t1 is one of the first timing offset, the second timing offset, or the third timing offset, t4 is the fourth timing offset, and tsubframe represents a delay between the first receiving subframe and the first subframe that is in the data frame configuration.

Alternatively, the determining unit 1002 may be specifically configured to: determine time t for receiving the first receiving subframe as: $t = t_0 - (t_1/2+t_4) + t_{subframe}$, where t0 is the reference time and is time when the first serving base station sends a downlink data frame to the first UE, (t1/2+t4) is the first timing advance, t1 is one of the first timing offset, the second timing offset, or the third timing offset, t4 is the fourth timing offset, and tsubframe represents a delay between the first receiving subframe and the first subframe that is in the data frame configuration.

It should be understood that in the foregoing formulas (1) to (5) by using which the first UE determines the time t for receiving the first receiving subframe, selection of the reference time and examples of the first timing advance are merely exemplary, but are not intended to limit the scope of the present invention.

It should be noted that being determined by using a timing offset does not mean being totally equal to the timing offset here. For example, the first timing advance is determined by using the first timing offset, and it is assumed that the first timing offset is TA1; then the first timing advance may be TA1, or TA1/2, or the like. For another example, the first timing advance is determined by using a combination of the first timing offset and the second timing offset, and it is assumed that the first timing offset is TA1, and the second timing offset is TA2; then the first timing advance may be (TA1+TA2)/2, or the like. In an actual network, a timing offset is related to a transmission delay. In a normal case, it may be considered that the timing offset is twice as long as the transmission delay. For example, a timing offset between UE and a base station may be twice as long as a transmission delay between the UE and the base station.

By using the foregoing solutions, the first timing advance is determined by using the timing offset, and the time when the first UE receives the first receiving subframe sent by the second UE is adjusted, so that the first UE has more accurate timing of a data frame, and interference among symbols can be avoided.

Optionally, as another embodiment, the acquiring unit 1001 may be specifically configured to: receive the first timing advance delivered by the first serving base station of the first UE, that is, acquire the first timing advance from the first serving base station. Alternatively, the acquiring unit 1001 may be specifically configured to: receive at least one timing offset that is delivered by the first serving base station and is used for determining the first timing advance, and determine the first timing advance according to the at least one timing offset. The first timing advance is determined by the determining unit 1002 according to the at least one timing offset. It should be understood that this is not limited in this embodiment of the present invention.

Optionally, as another embodiment, the determining unit 1002 may be further configured to: determine, according to the reference time, a second timing advance, and the data frame configuration, time when the first UE sends a first sending subframe that is in the data frame configuration, where the second timing advance represents a timing advance for the first UE to send the first sending subframe. Optionally, a value of the second timing advance may be the first timing offset between the first UE and the first serving base station.

Optionally, as another embodiment, the acquiring unit 1001 may be specifically configured to: acquire the data frame configuration from a network side device (for example, the first serving base station), that is, the data frame configuration is delivered to the first UE by the first serving base station. Alternatively, the acquiring unit 1001 may be specifically configured to: pre-negotiate with the second UE on the data frame configuration to be used. For example, one UE of the first UE and the second UE determines the data frame configuration, and sends the data frame configuration to the other UE.

Optionally, as another embodiment, the data frame configuration acquired by the acquiring unit 1001 may include at least one GP from sending to receiving and at least one GP from receiving to sending; or the data frame configuration may include only one GP from sending to receiving, the data frame configuration may also include no GP, or the like. It should be understood that a form of the data frame configuration used in this embodiment of the present invention is not limited. For specific examples, reference may be made to the foregoing embodiments in FIG. 4 to FIG. 7, and no further details are provided herein again.

It should be understood that the data frame configuration may include at least one GP from sending to receiving and at least one GP from receiving to sending, or the data frame configuration may also include only one GP from sending to receiving, or the data frame configuration may also include no GP. It should be understood that a form of the data frame configuration used in this embodiment of the present invention is not limited.

Optionally, the first UE and the second UE may negotiate to determine setting of the GP in the data frame configuration. Specifically, the determining unit 1002 may be further configured to: determine first time and second time according to time when UE performing device-to-device D2D communication receives a first receiving subframe that is in a data frame configuration, time when the UE sends a first sending subframe that is in the data frame configuration, and the data frame configuration; and set a guard period between the first subframe and a second subframe according to the first time and the second time. The first subframe and the second subframe are sequentially adjacent in the data frame configuration; when the first subframe is a receiving subframe and the second subframe is a sending subframe, the first time represents end time (which is also referred to as "stop time") when the UE receives the first subframe, and the second time represents start time when the UE sends the second subframe; or, when the first subframe is a sending subframe and the second subframe is a receiving subframe, the first time represents end time when the UE sends the first subframe, and the second time represents start time when the UE receives the second subframe.

In other words, the determining unit 1002 may be further configured to: set a GP according to a timing advance of receiving, a timing advance of sending, and a data frame configuration. For example, the GP is set according to the first timing advance, the second timing advance, and the data frame configuration. Specifically, when a difference between the first time and the second time is greater than a first threshold, it is set, in the data configuration, that no guard period is included between the first subframe and the second subframe; or when a difference between the first time and the second time is less than or equal to a first threshold, it is set, in the data configuration, that at least one guard period is included between the first subframe and the second subframe.

Therefore, whether to set a GP in a data frame configuration is determined according to two sequentially adjacent subframes in the data frame configuration, that is, according to receiving end time of a receiving subframe and sending start time of a sending subframe, or sending end time of a sending subframe and receiving start time of a receiving subframe. In this way, interference among symbols is avoided, and resources can be effectively utilized.

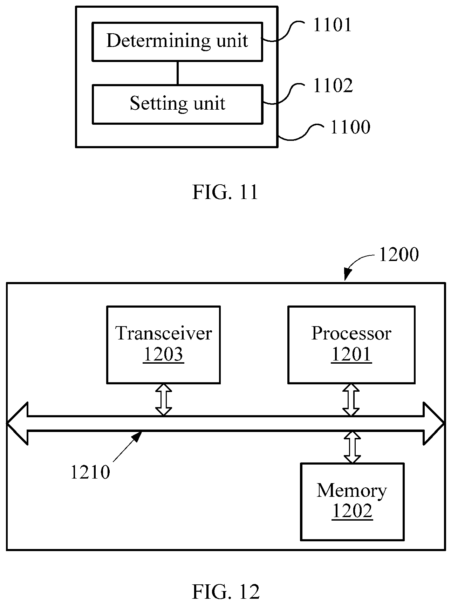

FIG. 11 is a structural block diagram of a device according to an embodiment of the present invention. The device 1100 includes a determining unit 1101 and a setting unit 1102.

The determining unit 1101 is configured to determine first time and second time according to time when UE performing device-to-device D2D communication receives a first receiving subframe that is in a data frame configuration, time when the UE sends a first sending subframe that is in the data frame configuration, and the data frame configuration.

The setting unit 1102 is configured to set a guard period between the first subframe and a second subframe according to the first time and the second time that are determined by the determining unit 1101. The first subframe and the second subframe are sequentially adjacent in the data frame configuration; when the first subframe is a receiving subframe and the second subframe is a sending subframe, the first time represents end time (which is also referred to as "stop time") when the UE receives the first subframe, and the second time represents start time when the UE sends the second subframe; or, when the first subframe is a sending subframe and the second subframe is a receiving subframe, the first time represents end time when the UE sends the first subframe, and the second time represents start time when the UE receives the second subframe.

In this embodiment of the present invention, whether to set a GP in a data frame configuration is determined according to two sequentially adjacent sub frames in the data frame configuration, that is, according to receiving end time of a receiving subframe and sending start time of a sending subframe, or sending end time of a sending subframe and receiving start time of a receiving subframe. In this way, interference among symbols is avoided, and resources can be effectively utilized.

It should be noted that, in a case in which the first subframe is a receiving subframe and the second subframe is a sending subframe, the first receiving subframe may be the same as or different from the first subframe, and in the data frame configuration, there is a particular subframe delay between the first receiving subframe and the first subframe; therefore, the end time for receiving the first subframe may be determined according to receiving time of the first receiving subframe and the subframe delay. Similarly, the start time for sending the second subframe may also be determined according to sending time of the first sending subframe and the subframe delay.

Correspondingly, in a case in which the second subframe is a receiving subframe and the first subframe is a sending subframe, the first receiving subframe may be the same as or different from the second subframe, and in the data frame configuration, there is a particular subframe delay between the first receiving subframe and the second subframe; therefore, the start time for receiving the second subframe may be determined according to receiving time of the first receiving subframe and the subframe delay. Similarly, the end time for sending the first subframe may also be determined according to sending time of the first sending subframe and the subframe delay.

The device 1100 can implement steps involved in the methods in FIG. 8 and FIG. 9, and to avoid repetition, no further details are provided again.

Optionally, as an embodiment, the setting unit 1102 may be specifically configured to: when a difference between the first time and the second time is greater than a first threshold, set, in the data configuration, that no guard period is included between the first subframe and the second subframe; or, the setting unit 1102 may be specifically configured to: when a difference between the first time and the second time is less than or equal to a first threshold, set, in the data configuration, that at least one guard period is included between the first subframe and the second subframe.

Optionally, as another embodiment, a device 1100 may be a network side device or user equipment. That is, the GP in the data frame configuration may be set by the network side device (for example, a serving base station of the first UE or a base station controller), and the GP in the data frame configuration may also be set through pre-negotiation by the first UE and the second UE. It should be understood that this is not limited in this embodiment of the present invention.

An embodiment of the present invention further provides an apparatus embodiment for implementing steps and methods in the foregoing method embodiments. FIG. 12 is a structural block diagram of first user equipment according to another embodiment. In this embodiment, the device 1200 includes a processor 1201, a memory 1202, and a transceiver 1203. The processor 1201 controls an operation of the device 1200. The processor 1201 may also be referred to as a CPU (Central Processing Unit, central processing unit). The memory 1202 may include a read-only memory and a random access memory, and provide the processor 1201 with instructions and data. A part of the memory 1202 may also include a nonvolatile random access memory (NVRAM). The processor 1201, the memory 1202, and the transceiver 1203 are coupled together by using a bus system 1210. The bus system 1210 further includes, in addition to a data bus, a power bus, a control bus, and a status signal bus. However, for the purpose of clear description, all buses are marked as the bus system 1210 in the figure.

The methods disclosed in the foregoing embodiments of the present invention may be used in the device 1200. The processor 1201 may be an integrated circuit chip, and has a signal processing capability. In an implementation process, steps in the foregoing methods may be completed by using an integrated logic circuit in a form of hardware or an instruction in a form of software in the processor 1201.

The processor 1201 is configured to acquire reference time, a first timing advance, and a data frame configuration, where the first timing advance represents a timing advance for the transceiver 1203 to receive a first receiving subframe that is in the data frame configuration, and the first receiving subframe is sent by second UE.

The processor 1201 is further configured to determine, according to the acquired reference time, first timing advance, and data frame configuration, time for receiving the first receiving subframe.

In this embodiment of the present invention, first UE determines, according to reference time, a first timing advance, and a data frame configuration, time for receiving a first receiving subframe that is in the data frame configuration, where the first receiving subframe is sent by second UE, and the first timing advance represents a timing advance for the first UE to receive the first receiving subframe that is in the data frame configuration. Therefore, the time when the first UE receives the first receiving subframe sent by the second UE is adjusted by using the first timing advance, so that the first UE has more accurate timing of a data frame, and interference among symbols can be avoided.

The first UE 1200 can implement steps, which involve the first UE, of the methods in FIG. 1 to FIG. 7, and to avoid repetition, no further details are provided again.

Optionally, as an embodiment, when a first serving base station of the first UE is the same as a second serving base station of the second UE, as shown in the scenario in FIG. 1, the first timing advance acquired by the processor 1201 may be determined according to at least one of the following timing offsets: a first timing offset between the first UE and the first serving base station, a second timing offset between the second UE and the second serving base station, and a third timing offset between the first UE and the second UE. For example, the first timing advance acquired by the processor 1201 may be the first timing offset, or may be a combination of multiple timing offsets.

Optionally, the reference time acquired by the processor 1201 may be determined according to at least one of the following kinds of time: time when the first serving base station sends a data frame, time when the first UE receives a data frame sent by the first serving base station, and time when the second UE receives a data frame sent by the first serving base station.

Alternatively, when a first serving base station of the first UE is different from a second serving base station of the second UE, as shown in the scenario in FIG. 2, the first timing advance acquired by the processor 1201 may be determined according to at least one of the following timing offsets: a first timing offset between the first UE and the first serving base station, a second timing offset between the second UE and the second serving base station, a third timing offset between the first UE and the second UE, and a fourth timing offset between the first serving base station and the second serving base station.

Optionally, the reference time acquired by the processor 1201 may be determined according to at least one of the following kinds of time: time when the first serving base station sends a data frame, time when the second serving base station sends a data frame, time when the first UE receives a data frame sent by the first serving base station, time when the first UE receives a data frame sent by the second serving base station, time when the second UE receives a data frame sent by the first serving base station, and time when the second UE receives a data frame sent by the second serving base station.

Specifically, the processor 1201 may be specifically configured to: determine time t for receiving the first receiving sub frame as: $t = t_0 - t_1 + t_{subframe}$, where t0 is the reference time and is time when the first serving base station sends a downlink data frame to the first UE, t1 is the first timing advance and is one of the first timing offset, the second timing offset, or the third timing offset, and tsubframe represents a delay between the first receiving subframe and the first subframe that is in the data frame configuration.

Alternatively, the processor 1201 may be specifically configured to: determine time t for receiving the first receiving subframe as: $t = t_0 - t_1 / 2 + t_{subframe}$, where t0 is the reference time and is time when the first serving base station sends a downlink data frame to the first UE, t1 is one of the first timing offset, the second timing offset, or the third timing offset, t1/2 is the first timing advance, and tsubframe represents a delay between the first receiving subframe and the first subframe that is in the data frame configuration.

Alternatively, the processor 1201 may be specifically configured to: determine time t for receiving the first receiving subframe as: $t = t_0 - (t_1 - t_2 - t_3) + t_{subframe}$, where t0 is the reference time and is time when the first serving base station sends a downlink data frame to the first UE, (t1-t2-t3) is the first timing advance, t1 is the first timing offset, t2 is the second timing offset, t3 is the third timing offset, and tsubframe represents a delay between the first receiving subframe and the first subframe that is in the data frame configuration.

In the scenario shown in FIG. 2, the processor 1201 may be specifically configured to: determine time t for receiving the first receiving subframe as: $t = t_0 - (t_1 + t_4) + t_{subframe}$, where t0 is the reference time and is time when the first serving base station sends a downlink data frame to the first UE, (t1+t4) is the first timing advance, t1 is one of the first timing offset, the second timing offset, or the third timing offset, t4 is the fourth timing offset, and tsubframe represents a delay between the first receiving subframe and the first subframe that is in the data frame configuration.

Alternatively, the processor 1201 may be specifically configured to: determine time t for receiving the first receiving subframe as: $t = t_0 - (t_1/2 + t_4) + t_{subframe}$, where t0 is the reference time and is time when the first serving base station sends a downlink data frame to the first UE, (t1/2+t4) is the first timing advance, t1 is one of the first timing offset, the second timing offset, or the third timing offset, t4 is the fourth timing offset, and tsubframe represents a delay between the first receiving subframe and the first subframe that is in the data frame configuration.

It should be understood that in the foregoing formulas (1) to (5) by using which the first UE determines the time t for receiving the first receiving subframe, selection of the reference time and examples of the first timing advance are merely exemplary, but are not intended to limit the scope of the present invention.

It should be noted that being determined by using a timing offset does not mean being totally equal to the timing offset here. For example, the first timing advance is determined by using the first timing offset, and it is assumed that the first timing offset is TA1; then the first timing advance may be TA1, or TA1/2, or the like. For another example, the first timing advance is determined by using a combination of the first timing offset and the second timing offset, and it is assumed that the first timing offset is TA1, and the second timing offset is TA2; then the first timing advance may be (TA1+TA2)/2, or the like. In an actual network, a timing offset is related to a transmission delay. In a normal case, it may be considered that the timing offset is twice as long as the transmission delay. For example, a timing offset between UE and a base station may be twice as long as a transmission delay between the UE and the base station.

By using the foregoing solutions, the first timing advance is determined by using the timing offset, and the time when the first UE receives the first receiving subframe sent by the second UE is adjusted, so that the first UE has more accurate timing of a data frame, and interference among symbols can be avoided.

Optionally, as another embodiment, the processor 1201 may be specifically configured to: receive, by using the transceiver 1203, the first timing advance delivered by the first serving base station, that is, acquire the first timing advance from the first serving base station. Alternatively, the processor 1201 may be specifically configured to: receive, by using the transceiver 1203, at least one timing offset that is delivered by the first serving base station and is used for determining the first timing advance, and determine the first timing advance according to the at least one timing offset. The first timing advance is determined by the processor 1201 according to the at least one timing offset. It should be understood that this is not limited in this embodiment of the present invention.

Optionally, as another embodiment, the processor 1201 may be further configured to: determine, according to the reference time, a second timing advance, and the data frame configuration, time when the first UE sends a first sending subframe that is in the data frame configuration, where the second timing advance represents a timing advance for the transceiver 1203 to send the first sending subframe. Optionally, a value of the second timing advance may be the first timing offset between the first UE and the first serving base station.

Optionally, as another embodiment, the processor 1201 may be specifically configured to: acquire the data frame configuration from a network side device (for example, the first serving base station), that is, the data frame configuration is delivered to the first UE by the first serving base station. Alternatively, the processor 1201 may be specifically configured to: pre-negotiate with the second UE on the data frame configuration to be used. For example, one UE of the first UE and the second UE determines the data frame configuration, and sends the data frame configuration to the other UE.

Optionally, as another embodiment, the data frame configuration acquired by the processor 1201 may include at least one GP from sending to receiving and at least one GP from receiving to sending; or the data frame configuration may include only one GP from sending to receiving, the data frame configuration may also include no GP, or the like. It should be understood that a form of the data frame configuration used in this embodiment of the present invention is not limited. For specific examples, reference may be made to the foregoing embodiments in FIG. 4 to FIG. 7, and no further details are provided herein again.

It should be understood that the data frame configuration may include at least one GP from sending to receiving and at least one GP from receiving to sending, or the data frame configuration may also include only one GP from sending to receiving, or the data frame configuration may also include no GP. It should be understood that a form of the data frame configuration used in this embodiment of the present invention is not limited.

Optionally, the first UE and the second UE may negotiate to determine setting of the GP in the data frame configuration. Specifically, the processor 1201 may be further configured to: determine first time and second time according to time when UE performing device-to-device D2D communication receives a first receiving subframe that is in a data frame configuration, time when the UE sends a first sending subframe that is in the data frame configuration, and the data frame configuration; and set a guard period between the first subframe and a second subframe according to the first time and the second time. The first subframe and the second subframe are sequentially adjacent in the data frame configuration; when the first subframe is a receiving subframe and the second subframe is a sending subframe, the first time represents end time (which is also referred to as "stop time") when the UE receives the first subframe, and the second time represents start time when the UE sends the second subframe; or, when the first subframe is a sending subframe and the second subframe is a receiving subframe, the first time represents end time when the UE sends the first subframe, and the second time represents start time when the UE receives the second subframe.

In other words, the processor 1201 may be further configured to: set a GP according to a timing advance of receiving, a timing advance of sending, and a data frame configuration. For example, the GP is set according to the first timing advance, the second timing advance, and the data frame configuration. Specifically, when a difference between the first time and the second time is greater than a first threshold, it is set, in the data configuration, that no guard period is included between the first subframe and the second subframe; or when a difference between the first time and the second time is less than or equal to a first threshold, it is set, in the data configuration, that at least one guard period is included between the first subframe and the second subframe.

Therefore, whether to set a GP in a data frame configuration is determined according to two sequentially adjacent subframes in the data frame configuration, that is, according to receiving end time of a receiving subframe and sending start time of a sending subframe, or sending end time of a sending subframe and receiving start time of a receiving subframe. In this way, interference among symbols is avoided, and resources can be effectively utilized.

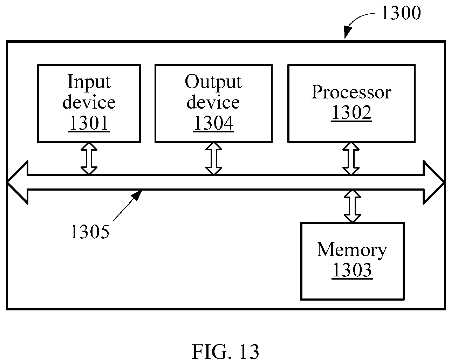

FIG. 13 is a structural block diagram of a device according to another embodiment of the present invention. A network management server 1300 may include an input device 1301, an output device 1304, a processor 1302, and a memory 1303.

The memory 1303 may include a read-only memory and a random access memory, and provide the processor 1302 with instructions and data. A part of the memory 1303 may also include a nonvolatile random access memory (NVRAM).

The memory 1303 stores the following elements, executable modules or data structures, or subsets thereof, or extended sets thereof:

operation instructions: including various operation instructions, and used to implement various operations; and an operating system: including various system programs, and used to implement various basic services and process hardware-based tasks.

The processor 1302 controls operations of the network management server 1300. The processor 1302 may also be referred to as a CPU. The memory 1303 may include a read-only memory and a random access memory, and provide the processor 1302 with instructions and data. A part of the memory 1303 may also include a nonvolatile random access memory (NVRAM). In specific application, components of network management server 1300 are coupled together by using a bus system 1305. The bus system 1305 may include, in addition to a data bus, a power bus, a control bus, a status signal bus, and the like. However, for the purpose of clear description, all buses are marked as the bus system 1305 in the figure.

The methods disclosed in the foregoing embodiments of the present invention may be used in the processor 1302, or may be implemented by using the processor 1302. The processor 1302 may be an integrated circuit chip, and has a signal processing capability. In an implementation process, steps in the foregoing methods may be completed by using an integrated logic circuit in a form of hardware or an instruction in a form of software in the processor 1302.

In this embodiment of the present invention, the processor 1302 calls operation instructions (the operation instructions may be stored in an operating system) stored in the memory 1303 to perform the following operations: determining first time and second time according to time when UE performing device-to-device D2D communication receives a first receiving subframe that is in a data frame configuration, time when the UE sends a first sending subframe that is in the data frame configuration, and the data frame configuration that are input by the input device 1301; and setting a guard period between the first subframe and a second subframe according to the first time and the second time; where, the first subframe and the second subframe are sequentially adjacent in the data frame configuration; when the first subframe is a receiving subframe and the second subframe is a sending subframe, the first time represents end time (which is also referred to as "stop time") when the UE receives the first subframe, and the second time represents start time when the UE sends the second subframe; or, when the first subframe is a sending subframe and the second subframe is a receiving subframe, the first time represents end time when the UE sends the first subframe, and the second time represents start time when the UE receives the second subframe.

In this embodiment of the present invention, whether to set a GP in a data frame configuration is determined according to two sequentially adjacent subframes in the data frame configuration, that is, according to receiving end time of a receiving subframe and sending start time of a sending subframe, or sending end time of a sending subframe and receiving start time of a receiving subframe. In this way, interference among symbols is avoided, and resources can be effectively utilized.

It should be noted that, in a case in which the first subframe is a receiving subframe and the second subframe is a sending subframe, the first receiving subframe may be the same as or different from the first subframe, and in the data frame configuration, there is a particular subframe delay between the first receiving subframe and the first subframe; therefore, the end time for receiving the first subframe may be determined according to receiving time of the first receiving subframe and the subframe delay. Similarly, the start time for sending the second subframe may also be determined according to sending time of the first sending subframe and the subframe delay.

Correspondingly, in a case in which the second subframe is a receiving subframe and the first subframe is a sending subframe, the first receiving subframe may be the same as or different from the second subframe, and in the data frame configuration, there is a particular subframe delay between the first receiving subframe and the second subframe; therefore, the start time for receiving the second subframe may be determined according to receiving time of the first receiving subframe and the subframe delay. Similarly, the end time for sending the first subframe may also be determined according to sending time of the first sending subframe and the subframe delay.

The device 1300 can implement steps involved in the methods in FIG. 8 and FIG. 9, and to avoid repetition, no further details are provided again.

Optionally, as an embodiment, the processor 1302 may be specifically configured to: when a difference between the first time and the second time is greater than a first threshold, set, in the data configuration, that no guard period is included between the first subframe and the second subframe; or, the processor 1302 may be specifically configured to: when a difference between the first time and the second time is less than or equal to a first threshold, set, in the data configuration, that at least one guard period is included between the first subframe and the second subframe.

Optionally, as another embodiment, the device 1300 may be a network side device or user equipment. That is, the GP in the data frame configuration may be set by the network side device (for example, a serving base station of the first UE or a base station controller), and the GP in the data frame configuration may also be set through pre-negotiation by the first UE and the second UE. It should be understood that this is not limited in this embodiment of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the shown or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts shown as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A method for device-to-device communication, comprising:

   acquiring (301), by a first user equipment, reference time, a first timing advance, and a device-to-device, D2D, data frame configuration, wherein the first timing advance represents a timing advance for the first user equipment to receive a first receiving subframe in a sequence of transmission subframes in the D2D data frame configuration, and the first receiving subframe is sent by a second user equipment;

   determining (302), by the first user equipment according to the reference time, the first timing advance, and the D2D data frame configuration, time for receiving the first receiving subframe; and

   determining, by the first user equipment according to the reference time, a second timing advance, and the D2D data frame configuration, time for sending a first sending subframe in a sequence of transmission subframes in the D2D data frame configuration, wherein the second timing advance represents a timing advance for the first user equipment to send the first sending subframe,

   wherein a serving base station of the first user equipment is the serving base station of the second user equipment, and

   wherein the second timing advance is a first timing offset between the first user equipment and the serving base station, and

   the first timing advance is determined according to at least one of the following timing offsets: a second timing offset between the second user equipment and the serving base station, and a third timing offset between the first user equipment and the second user equipment,

   and wherein the determining, by the first user equipment according to the reference time, the first timing advance, and the D2D data frame configuration, time for receiving the first receiving subframe comprises: determining time t for receiving the first receiving subframe as:

$$t = t_0 - t_1 / 2 + t_{subframe}$$

wherein, $t_0$ is the reference time and is time when the first user equipment receives a data frame sent by the serving base station, $t_1$ is one of the second timing offset, or the third timing offset, $t_1/2$ is the first timing advance, and $t_{subframe}$ represents a delay between the first receiving subframe and the first subframe that is in the D2D data frame configuration.

2. The method according to claim 1, wherein the acquiring, by a first user equipment, the first timing advance comprises:

receiving, by the first user equipment, the first timing advance delivered by the serving base station of the first user equipment; or
receiving, by the first user equipment, at least one timing offset that is delivered by the serving base station of the first user equipment and is used for determining the first timing advance, and determining the first timing advance according to the at least one timing offset.

3. A user equipment (1000), comprising:

an acquiring unit (1001), configured to acquire reference time, a first timing advance, and a device-to-device, D2D, data frame configuration, wherein the first timing advance represents a timing advance for the user equipment to receive a first receiving subframe in a sequence of transmission subframes in the D2D data frame configuration, and the first receiving subframe is sent by a second user equipment; and
a determining unit (1002), configured to determine, according to the reference time, the first timing advance, and the D2D data frame configuration that are acquired by the acquiring unit (1001), time for receiving the first receiving subframe; wherein,
the determining unit (1002) is further configured to: determine, according to the reference time, a second timing advance, and the D2D data frame configuration, time for sending a first sending subframe in a sequence of transmission subframes in the D2D data frame configuration, wherein the second timing advance represents a timing advance for the user equipment to send the first sending subframe,
wherein a serving base station of the user equipment is the serving base station of the second user equipment,
wherein the second timing advance is a first timing offset between the user equipment and the serving base station,
and the first timing advance acquired by the acquiring unit (1001) is determined according to at least one of the following timing offsets:

a second timing offset between the second user equipment and the serving base station, and a third timing offset between the user equipment and the second user equipment,
wherein the determining unit (1002) is specifically configured to determine time t when the user equipment receives the first receiving subframe as: $t = t_0 - t_1 / 2 + t_{subframe}$
wherein, $t_0$ is the reference time and is time when the user equipment receives a data frame sent by the serving base station, $t_1$ is one of the second timing offset, or the third timing offset, $t_1/2$ is the first timing advance, and $t_{subframe}$ represents a delay between the first receiving subframe and the first subframe that is in the D2D data frame configuration.

4. The user equipment according to claim 3, wherein,
the acquiring unit (1001) is specifically configured to: receive the first timing advance delivered by the serving base station of the user equipment; or
the acquiring unit (1001) is specifically configured to: receive at least one timing offset that is delivered by the serving base station of the user equipment and is used for determining the first timing advance, and determine the first timing advance according to the at least one timing offset.

5. The user equipment according to any one of claims 3 or 4, wherein the D2D data frame configuration acquired by the acquiring unit (1001) comprises at least one guard period from sending to receiving and at least one guard period from receiving to sending.

6. The user equipment according to any one of claims 3 to 5, wherein the D2D data frame configuration acquired by the acquiring unit (1001) is delivered to the user equipment by the serving base station of the user equipment, or the D2D data frame configuration is determined through pre-negotiation by the user equipment and the second user equipment.

**Patentansprüche**

1. Verfahren zur Vorrichtung-zu-Vorrichtung-Kommunikation, umfassend:

Erfassen (301), durch ein erstes Benutzergerät, einer Referenzzeit, eines ersten "Timing Advance" und einer D2D-Datenrahmenkonfiguration (D2D = "Device-to-Device"), wobei das erste "Timing Advance" ein "Timing Advance" für das erste Benutzergerät darstellt, um einen ersten Empfangsunterrahmen in einer Sequenz von Übertragungsunterrahmen in der D2D-Datenrahmenkonfiguration zu empfangen, und der erste Empfangsunterrahmen durch ein zweites Benutzergerät gesendet wird;
Bestimmen (302), durch das erste Benutzergerät gemäß der Referenzzeit, des ersten "Timing Advance" und der D2D-Datenrahmenkonfiguration, der Zeit für den Empfang des ersten Empfangsunterrahmens; und
Bestimmen, durch das erste Benutzergerät gemäß der Referenzzeit, eines zweiten "Timing Advance" und der D2D-Datenrahmenkonfiguration, der Zeit für das Senden eines ersten Sendeunterrahmens in einer Sequenz von Übertragungsunterrahmen in der D2D-Datenrahmenkonfiguration, wobei das zweite "Timing Advance" ein "Timing Advance" für das erste Benutzergerät darstellt, um den ersten Sendeunterrahmen zu senden,
wobei eine bedienende Basisstation des ersten Benutzergerätes die bedienende Basisstation des zweiten Benutzergerätes ist, und
wobei das zweite "Timing Advance" ein erster Zeitversatz zwischen dem ersten Benutzergerät und der bedienenden Basisstation ist, und
das erste "Timing Advance" gemäß mindestens einem der folgenden Zeitversätze bestimmt wird: einem zweiten Zeitversatz zwischen dem zweiten Benutzergerät und der bedienenden Basisstation und einem dritten Zeitversatz zwischen dem ersten Benutzergerät und dem zweiten Benutzergerät, und
wobei das Bestimmen, durch das erste Benutzergerät gemäß der Referenzzeit, des ersten "Timing Advance" und der D2D-Datenrahmenkonfiguration, der Zeit für den Empfang des ersten Empfangsunterrahmens umfasst:
Bestimmen der Zeit t für den Empfang des ersten Empfangsunterrahmens als:

$$t = t_0 - t_1/2 + t_{subframe}$$

wobei $t_0$ die Referenzzeit ist und die Zeit ist, wenn das erste Benutzergerät einen von der bedienenden Basisstation gesendeten Datenrahmen empfängt, $t_1$ entweder der zweite Zeitversatz oder der dritte Zeitversatz ist, $t_1/2$ das erste "Timing Advance" ist und $t_{subframe}$ eine Verzögerung zwischen dem ersten Empfangsunterrahmen und dem ersten Unterrahmen darstellt, der sich in der D2D-Datenrahmenkonfiguration befindet.

2. Verfahren nach Anspruch 1, wobei das Erfassen, durch ein erstes Benutzergerät, des ersten "Timing Advance" umfasst:

Empfangen, durch das erste Benutzergerät, des ersten von der bedienenden Basisstation des ersten Benutzergerätes gelieferten "Timing Advance"; oder
Empfangen, durch das erste Benutzergerät, mindestens eines Zeitversatzes, der von der bedienenden Basisstation des ersten Benutzergerätes geliefert wird und zum Bestimmen des ersten "Timing Advance" verwendet wird, und Bestimmen des ersten "Timing Advance" gemäß dem mindestens einen Zeitversatz.

3. Benutzergerät (1000), umfassend:

eine Erfassungseinheit (1001), die dazu konfiguriert ist, eine Referenzzeit, ein erstes "Timing Advance" und eine D2D-Datenrahmenkonfiguration (D2D = "Device-to-Device") zu erfassen, wobei das erste "Timing Advance" ein "Timing Advance" für das Benutzergerät darstellt, um einen ersten Empfangsunterrahmen in einer Sequenz von Übertragungsunterrahmen in der D2D-Datenrahmenkonfiguration zu empfangen, und der erste Empfangsunterrahmen durch ein zweites Benutzergerät gesendet wird; und
eine Bestimmungseinheit (1002), die dazu konfiguriert ist, gemäß der Referenzzeit, dem ersten "Timing Advance" und der D2D-Datenrahmenkonfiguration, die von der Erfassungseinheit (1001) erfasst werden, die Zeit für den Empfang des ersten Empfangs-Unterrahmens zu bestimmen; wobei

die Bestimmungseinheit (1002) ferner dazu konfiguriert ist, gemäß der Referenzzeit, einem zweiten "Timing Advance" und der D2D-Datenrahmenkonfiguration, die Zeit für das Senden eines ersten Sendeunterrahmens in einer Sequenz von Übertragungsunterrahmen in der D2D-Datenrahmenkonfiguration zu bestimmen, wobei das zweite "Timing Advance" ein "Timing Advance" für das Benutzergerät zum Senden des ersten Sende-Unterrahmens darstellt,

wobei eine bedienende Basisstation des Benutzergerätes die bedienende Basisstation des zweiten Benutzergerätes ist,

wobei das zweite "Timing Advance" ein erster Zeitversatz zwischen dem Benutzergerät und der bedienenden Basisstation ist,

und das erste von der Erfassungseinheit (1001) erfasste "Timing Advance" gemäß mindestens einem der folgenden Zeitversätze bestimmt wird:

einem zweiten Zeitversatz zwischen dem zweiten Benutzergerät und der bedienenden Basisstation und einem dritten Zeitversatz zwischen dem Benutzergerät und dem zweiten Benutzergerät, wobei die Bestimmungseinheit (1002) insbesondere dazu konfiguriert ist, die Zeit t zu bestimmen, wenn das Benutzergerät den ersten Empfangsunterrahmen empfängt, als: $t = t_0 - t_1 / 2 + t_{subframe}$ wobei $t_0$ die Referenzzeit ist und die Zeit ist, wenn das Benutzergerät einen von der bedienenden Basisstation gesendeten Datenrahmen empfängt, $t_1$ entweder der zweite Zeitversatz oder der dritte Zeitversatz ist, $t_1/2$ das erste "Timing Advance" ist und $t_{subframe}$ eine Verzögerung zwischen dem ersten Empfangsunterrahmen und dem ersten Unterrahmen darstellt, der sich in der D2D-Datenrahmenkonfiguration befindet.

4. Benutzergerät nach Anspruch 3, wobei

die Erfassungseinheit (1001) insbesondere dazu konfiguriert ist, das erste von der bedienenden Basisstation des Benutzergeräts gelieferte "Timing Advance" zu empfangen; oder

die Erfassungseinheit (1001) insbesondere dazu konfiguriert ist: mindestens einen Zeitversatz zu empfangen, der von der bedienenden Basisstation des Benutzergeräts geliefert wird und zum Bestimmen des ersten "Timing Advance" verwendet wird, und den ersten "Timing Advance" gemäß dem mindestens einen Zeitversatz zu bestimmen.

5. Benutzergerät nach einem der Ansprüche 3 oder 4, wobei die von der Erfassungseinheit (1001) erfasste D2D-Datenrahmenkonfiguration mindestens eine Schutzperiode vom Senden bis zum Empfangen und mindestens eine Schutzperiode vom Empfangen bis zum Senden umfasst.

6. Benutzergerät nach einem der Ansprüche 3 bis 5, wobei die von der Erfassungseinheit (1001) erfasste D2D-Datenrahmenkonfiguration von der bedienenden Basisstation des Benutzergeräts an das Benutzergerät geliefert wird, oder die D2D-Datenrahmenkonfiguration durch Vorverhandeln zwischen dem Benutzergerät und dem zweiten Benutzergerät bestimmt wird.

**Revendications**

1. Procédé de communication entre dispositifs, comprenant les étapes consistant à :

acquérir (301), par un premier équipement d'utilisateur, un temps de référence, une première avance de temps et une configuration de trame de données entre dispositifs (D2D), la première avance de temps représentant une avance de temps pour le premier équipement d'utilisateur pour recevoir une première sous-trame de réception dans une séquence de sous-trames de transmission dans la configuration de trame de données D2D, et la première sous-trame de réception étant envoyée par un second équipement d'utilisateur ;

déterminer (302), par le premier équipement d'utilisateur selon le temps de référence, la première avance de temps et la configuration de trame de données D2D, un temps pour recevoir la première sous-trame de réception ; et

déterminer, par le premier équipement d'utilisateur selon le temps de référence, une seconde avance de temps et la configuration de trame de données D2D, un temps pour envoyer une première sous-trame d'envoi dans une séquence de sous-trames de transmission dans la configuration de trame de données D2D, la seconde avance de temps représentant une avance de temps pour le premier équipement d'utilisateur pour envoyer la première sous-trame d'envoi,

une station de base de desserte du premier équipement d'utilisateur étant la station de base de desserte du second équipement d'utilisateur, et

la seconde avance de temps étant un premier décalage de temps entre le premier équipement d'utilisateur et la station de base de desserte, et

la première avance de temps étant déterminée selon au moins un des décalages de temps suivants : un deuxième décalage de temps entre le second équipement d'utilisateur et la station de base de desserte et un troisième décalage de temps entre le premier équipement d'utilisateur et le second équipement d'utilisateur, et

la détermination, par le premier équipement d'utilisateur selon le temps de référence, la première avance de temps et la configuration de trame de données D2D, d'un temps pour recevoir la première sous-trame de réception comprenant l'étape consistant à : déterminer un temps t pour recevoir la première sous-trame de réception selon :

$$t = t_0 - t_1 / 2 + t_{\text{sous-trame}},$$

où to est le temps de référence et est le temps où le premier équipement d'utilisateur reçoit une trame de données envoyée par la station de base de desserte, $t_1$ est le deuxième décalage de temps ou le troisième décalage de temps, $t_1/2$ est la première avance de temps et $t_{\text{sous-trame}}$ représente un retard entre la première sous-trame de réception et la première sous-trame qui est dans la configuration de trame de données D2D.

2. Procédé selon la revendication 1, dans lequel l'acquisition, par un premier équipement d'utilisateur, de la première avance de temps comprend l'étape consistant à :

recevoir, par le premier équipement d'utilisateur, la première avance de temps fournie par la station de base de desserte du premier équipement d'utilisateur ; ou

recevoir, par le premier équipement d'utilisateur, au moins un décalage de temps qui est fourni par la station de base de desserte du premier équipement d'utilisateur et qui est utilisé pour déterminer la première avance de temps, et déterminer la première avance de temps selon l'au moins un décalage de temps.

3. Équipement d'utilisateur (1000), comprenant :

une unité d'acquisition (1001), configurée pour acquérir un temps de référence, une première avance de temps et une configuration de trame de données entre dispositifs (D2D), la première avance de temps représentant une avance de temps pour l'équipement d'utilisateur pour recevoir une première sous-trame de réception dans une séquence de sous-trames de transmission dans la configuration de trame de données D2D, et la première sous-trame de réception étant envoyée par un second équipement d'utilisateur ; et

une unité de détermination (1002), configurée pour déterminer, selon le temps de référence, la première avance de temps et la configuration de trame de données D2D qui sont acquis par l'unité d'acquisition (1001), un temps pour recevoir la première sous-trame de réception ;

l'unité de détermination (1002) étant en outre configurée pour : déterminer, selon le temps de référence, une seconde avance de temps et la configuration de trame de données D2D, un temps pour envoyer une première sous-trame d'envoi dans une séquence de sous-trames de transmission dans la configuration de trame de données D2D, la seconde avance de temps représentant une avance de temps pour l'équipement d'utilisateur pour envoyer la première sous-trame d'envoi,

une station de base de desserte de l'équipement d'utilisateur étant la station de base de desserte du second équipement d'utilisateur,

la seconde avance de temps étant un premier décalage de temps entre l'équipement d'utilisateur et la station de base de desserte,

et la première avance de temps acquise par l'unité d'acquisition (1001) étant déterminée selon au moins un des décalages de temps suivants : un deuxième décalage de temps entre le second équipement d'utilisateur et la station de base de desserte et un troisième décalage de temps entre l'équipement d'utilisateur et le second équipement d'utilisateur,

l'unité de détermination (1002) étant spécifiquement configurée pour déterminer un temps t où l'équipement d'utilisateur reçoit la première sous-trame de réception selon :

$$t = t_0 - t_1 / 2 + t_{\text{sous-trame}},$$

où to est le temps de référence et est le temps où l'équipement d'utilisateur reçoit une trame de données envoyée par la station de base de desserte, $t_1$ est le deuxième décalage de temps ou le troisième décalage de temps, $t_1/2$ est la première avance de temps et $t_{sous-trame}$ représente un retard entre la première sous-trame de réception et la première sous-trame qui est dans la configuration de trame de données D2D.

4. Équipement d'utilisateur selon la revendication 3, dans lequel :

l'unité d'acquisition (1001) est spécifiquement configurée pour : recevoir la première avance de temps fournie par la station de base de desserte de l'équipement d'utilisateur ; ou
l'unité d'acquisition (1001) est spécifiquement configurée pour : recevoir au moins un décalage de temps qui est fourni par la station de base desserte de l'équipement d'utilisateur et qui est utilisé pour déterminer la première avance de temps, et déterminer la première avance de temps selon l'au moins un décalage de temps.

5. Équipement d'utilisateur selon l'une quelconque des revendications 3 et 4, dans lequel la configuration de trame de données D2D acquise par l'unité d'acquisition (1001) comprend au moins une période de garde entre l'envoi et la réception et au moins une période de garde entre la réception et l'envoi.

6. Équipement d'utilisateur selon l'une quelconque des revendications 3 à 5, dans lequel la configuration de trame de données D2D acquise par l'unité d'acquisition (1001) est fournie à l'équipement d'utilisateur par la station de base de desserte de l'équipement d'utilisateur, ou la configuration de trame de données D2D est déterminée par pré-négociation par l'équipement d'utilisateur et le second équipement d'utilisateur.

FIG. 1

FIG. 2

First UE acquires reference time, a first timing advance, and a data frame configuration, where the first timing advance represents a timing advance for the first UE to receive a first receiving subframe that is in the data frame configuration, and the first receiving subframe is sent by second UE.

301

The first UE determines, according to the reference time, the first timing advance, and the data frame configuration, time for receiving the first receiving subframe.

302

FIG. 3

D2D data frame

| T | T | T | T | T' | R | R | R | R | R' |
|---|---|---|---|----|---|---|---|---|----|

| T | GP | R |
|---|----|---|

| R | GP | T |
|---|----|---|

FIG. 4

D2D data frame

| T | T | T | T | T' | R | R | R | R | R' |
|---|---|---|---|----|---|---|---|---|----|

| T | GP |
|---|-----|

| R | GP |
|---|-----|

FIG. 5

| T' | R | R | R | R | R | R | R | R | R' |
|----|----|----|----|----|----|----|----|----|----|
| T | T' | R | R | R | R | R | R | R | R' |
| T | T | T' | R | R | R | R | R | R | R' |
| T | T | T | T' | R | R | R | R | R | R' |
| T | T | T | T | T' | R | R | R | R | R' |
| T | T | T | T | T | T' | R | R | R | R' |
| T | T | T | T | T | T | T' | R | R | R' |
| T | T | T | T | T | T | T | T' | R | R' |
| T | T | T | T | T | T | T | T | T' | R' |

| T' | T' | R | R | R' | T | T' | R | R | R' |
|----|----|----|----|----|----|----|----|----|----|
| T | T' | R | R' | T | T | T' | R | R | R' |
| T | T' | R' | T | T | T | T' | R' | T | T |
| T | T' | R | R | R' | T | T | T | T | T |
| T | T' | R | R' | T | T | T | T | T | T |
| T | T' | R' | T | T | T | T | T | T | T |
| T | T' | R | R | R' | T | T' | R | R' | T |

FIG. 6

Reference
time

Data frame
configuration of
UE1

$\Delta t_{11}$

| T | T | T | T | T' | R | R | R | R | R' |

Sending time of UE1

Receiving time of UE1

| R | R | R | R | R' | T | T | T | T | T' |

Receiving time of UE2

Data frame
configuration of
UE2

$\Delta t_{21}$

| R | R | R | R | R' | T | T | T | T | T' |

$\Delta t_{22}$

Sending time of UE2

FIG. 7

First UE acquires a data frame configuration, where setting of a guard period in the data frame configuration is determined according to a first timing advance and a second timing advance, the first timing advance represents a timing advance for the first UE to receive a first receiving subframe that is in the data frame configuration, and the second timing advance represents a timing advance for the first UE to send a first sending subframe that is in the data frame configuration. ⌒ 801

The first UE performs device-to-device D2D communication with second UE according to the data frame configuration. ⌒ 802

FIG. 8

FIG. 9

FIG. 10

Determining unit — 1101

Setting unit — 1102

— 1100

FIG. 11

— 1200

Transceiver
1203

Processor
1201

1210

Memory
1202

FIG. 12

1300

| Input device 1301 | Output device 1304 | Processor 1302 |
| --- | --- | --- |

1305

Memory 1303

FIG. 13

**EP 3 001 742 B1**

**Patent documents cited in the description**

- WO 2013125925 A1
- WO 2012118451 A1